(19) Europäisches Patentamt
European Patent Office
Office européen des brevets

(11) Veröffentlichungsnummer: **0 001 631**
**A1**

# (12) EUROPÄISCHE PATENTANMELDUNG

(21) Anmeldenummer: **78101166.3**

(22) Anmeldetag: **17.10.78**

(51) Int. Cl.$^2$: **C 08 K 5/00**
C 08 L 27/06

(30) Priorität: **26.10.77 CH 13016 77**

(43) Veröffentlichungstag der Anmeldung:
**02.05.79 Patentblatt 79/9**

(84) Benannte Vertragsstaaten:
**BE CH DE FR GB NL SE**

(71) Anmelder: **CIBA-GEIGY AG**
**Patentabteilung Postfach**
**CH-4002 Basel(CH)**

(72) Erfinder: **Wehner, Wolfgang, Dr.**
**Wetzbach 34**
**D-6144 Zwingenberg(DE)**

(72) Erfinder: **Abeler, Gerd, Dr.**
**Wilhelm-Leuschner Strasse 235**
**D-6103 Griesheim über Darmstadt(DE)**

(54) **Mercaptane auf festen Trägern und deren Verwendung zum Stabilisieren von chlorhaltigen thermoplastischen Kunststoffen.**

(57) Auf einen festen Träger aufgebrachte Mercaptoacetate und Mercaptopropionate von 1- bis 6-wertigen Alkoholen können als rieselfähige und gerucharme Stabilisatoren für chlorhaltige Thermoplaste, insbesondere für PVC, verwendet werden. Geeignete Träger sind z.B. anorganische Füllstoffe, Metallcarboxylate, Harnstoff-Formaldehyd- Harze, insbesondere aber Kieselsäureaerogele. Die Mercaptoester sind zum Teil neue Verbindungen, insbesondere die Mercaptoester von N-Hydroxyäthyl-isocyanurat und -hydantoinen.

EP 0 001 631 A1

Croydon Printing Company Ltd.

3-11 394/CGM 181/+

## Mercaptane auf festen Trägern und deren Verwendung zum Stabilisieren von chlorhaltigen thermoplastischen Kunststoffen

Die vorliegende Erfindung betrifft eine Stabilisatorzusammensetzung aus einem oder mehreren Mercaptanen, die auf einem festen Trägermaterial aufgebracht sind, sowie die Verwendung solcher Zusammensetzungen zum Stabilisieren von chlorhaltigen thermoplastischen Kunststoffen.

Es ist schon vorgeschlagen worden, Mercaptane wie zum Beispiel Pentaerythroltetrathioglykolat in chlorhaltigen Polymeren als Vernetzungsmittel (US-PS 2,598,407) oder als Stabilisatoren (US-PS 3,144,422) zu verwenden.

Obwohl es sich um gute Stabilisatoren handelt, haben sie keine Bedeutung erlangen können, da diesen Mercaptanen und den unter Verwendung dieser Stabilisatoren hergestellten Fertigartikeln ein unangenehmer Geruch anhaftet. Ein weiterer Nachteil ist die schwierige Einarbeitung der Mercaptane in das zu stabilisierende Polymer, da es sich in der Mehrzahl um Substanzen mit hochviskoser oder zäh-sirupöser Konsistenz handelt.

Aufgabe vorliegender Erfindung ist es, eine Stabilisatorzusammensetzung mit Mercaptanen zu schaffen, die die zuvor erwähnten Nachteile nicht aufweist.

Gegenstand der vorliegenden Erfindung ist eine Stabilisatorzusammensetzung aus einem oder mehreren Mercaptanen der Formel I, II, III oder IV,

$$R(X)_n \qquad \text{I}$$

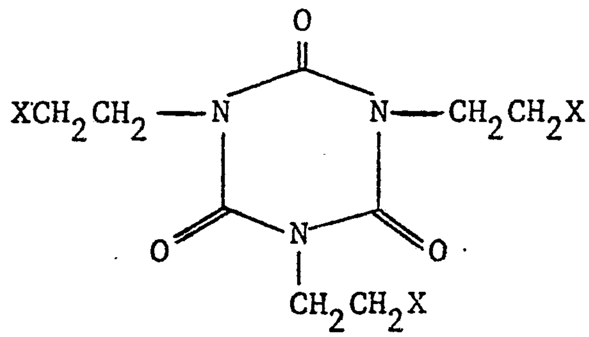

II

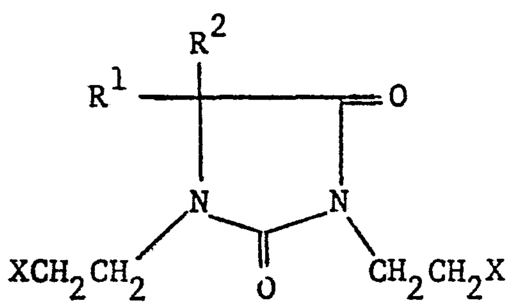

III

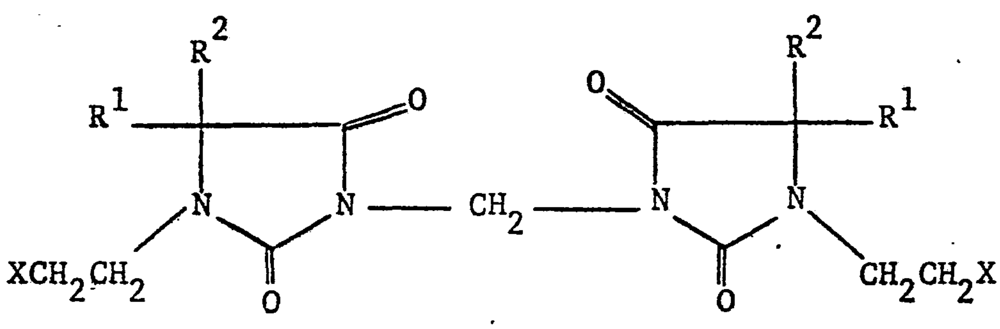

IV

worin

n eine ganze Zahl von 1 bis 6,

R einen n-wertigen, gegebenenfalls durch O- oder S-Atome unterbrochenen oder durch OH substituierten aliphatischen oder cycloaliphatischen Kohlenwasserstoffrest,

$R^1$ und $R^2$ Alkyl mit 1 - 4 C-Atomen und

X eine Gruppe $-O-CO-C_mH_{2m}-SH$ darstellen, wobei

m 1 oder 2 ist,

und einem festen Trägermaterial.

Das Trägermaterial kann gefärbt sein, wenn es z.B. ein Pigment darstellt. Vorzugsweise ist es farblos, bzw. weiss. Geeignete Trägermaterialien sind z.B. die für Polymere als natürliche oder synthetische Füllstoffe und Pigmente bekannten Materialien. Beispiele sind: Carbonate wie Kreide, Kalkspat und Dolomit, mineralische Silikate wie Glimmer, Talk, Wollastonit, Kaolin und Asbest, Glaspulver, Siliziumdioxid in Form von Sand, Quarzmehl oder pyrogener Kieselsäure (Kieselsäureaerogel, das als "Aerosil" erhältlich ist), Sulfate wie Gips oder Bariumsulfat, Metalloxide wie ZnO, $TiO_2$, $Sb_2O_3$, $Fe_2O_3$, $SnO_2$, $Al_2O_3$, $B_2O_3$, oxidische Pigmente, Lithopone, Schiefermehl, Russ, Graphit, Siliciumcarbid. Das Trägermaterial kann auch organischer Natur sein, z.B. Holz- oder Schalenmehl oder synthetische Polymere wie Harnstoff-Formaldehyd-Harze oder Melamin-Formaldehyd-Harze. Auch feste Metallseifen, insbesondere Ca-, Mg-, Zn-, Ba- und Cd-Carboxylate und deren Gemische, eignen sich als Trägermaterial. Das Trägermaterial ist vorzugsweise pulverförmig, wobei die Partikelgrösse und -gestalt praktisch nur einen unwesentlichen Einfluss auf die Stabilisatorwirkung hat.

Bevorzugte Trägermaterialien sind pulverförmige Harnstoff-Formaldehyd-Harze und Metallcarboxylate, besonders aber synthetische Kieselsäureaerogele.

Die erfindungsgemäss als Stabilisatoren verwendeten Mercaptane sind Ester von mono- und besonders von polyfuntionellen Alkoholen und Mercaptocarbonsäuren, nämlich von Mercaptoessigsäure und Mercaptopropionsäure.

Die mono- und polyfunktionellen Alkohole entsprechen der Formel $R(OH)_n$, worin n eine Zahl von 1 bis 6, besonders 2 bis 4 ist.

Für n=1 kann R z.B. $C_1$-$C_{18}$-Alkyl, $C_5$-$C_6$-Cycloalkyl, $C_3$-$C_{14}$-Alkoxyalkyl oder Alkylthioalkyl sein. R in seiner Bedeutung als Alkyl kann beispielsweise sein:

Methyl, Aethyl, n- oder i-Propyl, n-, i- oder t-Butyl, Pentyl, Hexyl, n-Octyl, 2-Aethylhexyl, Nonyl, Decyl, Undecyl, Dodecyl, Tetradecyl, Hexadecyl, Octadecyl, Eicosyl.

R als Cycloalkyl kann z.B. Cyclopentyl oder Cyclohexyl sein. R in seiner Bedeutung von Alkoxy- und Alkylthioalkyl kann beispielsweise sein:
Methoxyäthyl, 2-Methoxypropyl, Octoxyäthyl, Dodecyloxyäthyl, Methylthioäthyl, Octylthioäthyl.

R als zweiwertiger Rest (n=2) kann z.B. $C_2$-$C_{12}$-Alkylen, -Oxaalkylen oder -Thiaalkylen, $C_6$-$C_{14}$-Cycloalkylen oder der Rest eines $C_6$-$C_{24}$-Polyoxyalkylendioles darstellen. Beispiele sind Aethylen, 1,2- oder 1,3-Propylen, 1,2-, 1,3- oder 1,4-Butylen, Pentylen, Neopentylen, Hexylen, Octylen, Dodecylen, Cyclohexylen, 1,4-Cyclohexanbismethylen, Oxapentylen, Thiapentylen, sowie die Reste von Polyätherdiolen wie die Tri-, Tetra-, Penta- oder Hexameren des Aethylenglykols, des 1,2-Propylenglykols oder des Tetramethylenglykols.

R kann auch den Rest eines aliphatischen oder cycloaliphatischen drei- bis sechswertigen Polyols darstellen.

In diesem Fall enthält R bevorzugt 3 bis 10 C-Atome.

Beispiele für 3-wertige Alkohole sind Glycerin, 1,1,1-Trimethyloläthan, 1,1,1-Trimethylolpropan oder 1-Hydroxy-2,6-bis-hydroxymethylcyclohexan. Beispiele für vierwertige Alkohole sind Erythrit und Pentaerythrit, Diglycerinäther, Aethylenglykolbisglycerinäther, Tetrahydroxycyclohexan, Bistrimethylolpropanäther. Beispiele für sechswertige Alkohole sind die Hexite wie Sorbit, Mannit und Dulcit.

Bevorzugte Verbindungen der Formel I sind die Mercaptocarbonsäureester von Glycerin, Trimethylolpropan, Trimethyloläthan und Pentaerythrit.

Von den Verbindungen der Formel III und IV sind diejenigen bevorzugt, in denen $R^1$ und $R^2$ Methyl sind.

Die erfindungsgemässen Mercaptane der Formel I sind zum Teil bekannte, zum Teil neue Verbindungen, Soweit sie neue Verbindungen sind, können sie in Analoge zu den bekannten Verbindungen durch Veresterung der Alkohole $R(OH)_n$ mit einer Mercaptocarbonsäure $HS-C_mH_{2m}-COOH$ hergestellt werden.

Bei mehrwertigen Alkoholen kann hierbei ein Unterschuss an Mercaptocarbonsäure eingesetzt werden, wodurch man zu partiell veresterten Produkten gelangt, die noch freie Hydroxylgruppen enthalten. Diese freien Hydroxylgruppen können, falls gewünscht, mit anderen aliphatischen Carbonsäuren verestert werden.

Die Mercaptane der Formeln II, III und IV sind neue Verbindungen. Sie können ebenfalls durch direkte Veresterung der Polyole (Formel II, III und IV, X = OH) mit Mercaptoessigsäure oder Mercaptopropionsäure hergestellt werden. Nähere Details können den später folgenden Beispielen entnommen werden. Die hierzu verwendeten Polyole sind bekannte Verbindungen und können durch Hydroxyäthylierung der entsprechenden Hydantoine oder von Isocyanursäure hergestellt werden.

Das Aufbringen der Mercaptane auf die Trägermaterialien kann nach üblichen Misch-Verfahren geschehen. Wenn das Mercaptan eine Flüssigkeit von niedriger Viskosität ist, so kann der Träger direkt zum Mercaptan unter Rühren zugegeben werden. Meist handelt es sich jedoch bei den Mercaptanen um hoch-viskose Materialien. In diesem Falle verdünnt man das Mercaptan mit einem organischen Lösungsmittel vor der Zugabe des Trägers oder man gibt eine Lösung des Mercaptanes zum Träger, beispielsweise durch Aufsprühen. Das Lösungsmittel wird anschliessend durch Verdunsten entfernt. Als Lösungsmittel eignen sich vor allem Aether, Kohlenwasserstoffe und Halogenkohlenwasserstoffe.

Es hängt im wesentlichen vom gewünschten Aspekt des stabilisierten Kunststoffes ab, welches Gewichtsverhältnis gewählt wird. Wenn verhältnismässig wenig Mercaptan auf das Trägermaterial aufgebracht ist, muss eine relativ höhere Menge dieser Stabilisatorzusammensetzung eingesetzt werden, um die Wirkung zu erzielen, die eine Zusammensetzung mit höherem Mercaptangehalt aufweist. Das Gewichtsverhältnis von Trägermaterial zu Mercaptan beträgt bevorzugt 3:1 bis 1:12, insbesondere 1 : 1 bis 1:10.

Die so erhaltenen Stabilisatorzusammensetzungen stellen Adsorbate der Mercaptane auf den festen Trägern dar. Sie sind rieselfähige Pulver, die problemlos in den zu schützenden Thermoplasten eingearbeitet werden können. Der unangenehme Geruch der Mercaptane ist überraschend höchstens noch schwach wahrnehmbar. Als besonders überraschend wird es angesehen, dass trotz der starken Adsorption der Mercaptane eine gleiche

oder nur wenig verminderte Wirkung gegenüber den reinen Mercaptanen gefunden wird.

Die erfindungsgemässen Stabilisatorzusammensetzungen eignen sich daher hervorragend zur Stabilisierung von chlorhaltigen Thermoplasten gegen Wärmeabbau. Das Trägermaterial kann dabei die Funktion eines Füllstoffes übernehmen, im Falle von Metallcarboxylaten auch die Funktion eines zusätzlichen Stabilisators. Die Menge der zugesetzten Stabilisatorzusammensetzung richtet sich nach der gewünschten Stabilisierung. Im allgemeinen ist der Zusatz von 0,01 bis 10 Gew.-%, bezogen auf den chlorhaltigen Kunststoff,ausreichend. Vorzugsweise verwendet man 0,5 bis 3 Gew.-%.

Als chlorhaltige Thermoplaste werden bevorzugt Vinylchloridpolymere oder -copolymere verwendet. Bevorzugt sind Suspensions- und Massepolymere und ausgewaschene, also emulgatorarme Emulsionspolymere. Als Comonomere für die Copolymerisate kommen z.B. in Frage:

Vinylidenchlorid, Transdichloräthylen,Aethylen, Propylen, Butylen, Maleinsäure, Acrylsäure, Fumarsäure, Itaconsäure.

Weitere geeignete Kunststoffe sind nachchlorierte Polyolefine.

Das Einarbeiten der Stabilisatorzusammensetzung in den thermoplastischen Kunststoff erfolgt nach bekannten Verfahren, gegebenenfalls zusammen mit anderen Stabilisatoren. Eine homogene Mischung von Stabilisator und PVC kann z.B. mit Hilfe eines Zweiwalzenmischers bei 150-210°C erzielt werden. Je nach dem Verwendungszweck der Formmasse können zusammen mit dem Stabilisator auch weitere Zusätze eingearbeitet werden, wie Gleitmittel, bevorzugt Montanwachse oder Glycerinester, Weichmacher, Füllstoffe, Modifikatoren, wie etwa Schlagzäh-Zusätze, Pigmente, Lichtstabilisatoren,

ÜV-Absorber, Antioxidantien oder Costabilisatoren wie z.B. Phosphite. Die Thermoplaste können nach den dafür gebräuchlichen Formgebungsverfahren, z.B. durch Extrusion, Spritzgiessen oder Kalandrieren zu Formteilen verarbeitet werden.

Als Costabilisatoren können Barium-, Strontium-, Calcium-, Zink-, Kadmium-, Blei-, Zinn- oder Magnesiumsalzen von Phenolen oder von Carbonsäuren (Fettsäuren, epoxidierte Fettsäuren) mitverwendet werden. Als besonders günstig haben sich Mischungen von Calcium- und Zinkcarboxylaten mit 8 bis 20 C-Atomen erwiesen.

Die folgenden Beispiele beschreiben die Herstellung der neuen Mercaptoverbindungen sowie die Verwendung der erfindungsgemässen Stabilisatorzusammensetzungen. Teile sind darin Gewichtsteile.

Beispiel 1

Herstellung von 1,3-Di-[(β-mercaptoacetyloxy)-äthyl]-5,5-dimethylhydantoin.

31,7 g 1,3-Di-β-hydroxyäthyl-5,5-dimethylhydantoin und 27,6 g Thioglykolsäure werden in 100 ml Toluol gelöst und die Lösung unter Verwendung eines Wasser-Abscheiders zum Rückfluss erhitzt. Nach 8 Stunden ist die theoretische Menge von 5,4 ml Wasser abgeschieden. Die Lösung wird im Vakuum eingedampft, der Rückstand stellt ein farbloses viskoses Oel dar. Es enthält gemäss Elementaranalyse 17,1% Schwefel (berechnet 17,8%).

Beispiel 2

Herstellung von 1,1'-Di-[(β-mercaptoacetyloxy)-äthyl]-4,4,4',4'-tetramethyl-3,3'-methylenbishydantoin.

35,6 g 1,1'-Di-β-hydroxyäthyl-4,4,4',4'-tetramethyl-3,3'-methylenbishydantoin (0,1 Mol) und 18,4 g Thioglykolsäure (0,2 Mol) werden wie in Beispiel 1 beschrieben in siedendem Toluol (100 ml) verestert. Nach Abscheidung der theoretischen Wasser-Menge wird der Ester durch Eindampfen der Lösung im Vakuum isoliert.
Analyse: S = 11,9% (theor. 12,7%).

Beispiel 3

Herstellung von Tris-[(β-mercaptoacetyloxy)-äthyl]-isocyanurat.

26,1 g Tris-β-hydroxyäthyl-isocyanurat (0,1 Mol) und 27,6 g Thioglykolsäure (0,3 Mol) werden wie in Beispiel 1 beschrieben in 200 ml siedendem Toluol verestert. Nach Abscheidung der theoretischen Menge Wasser wird der Ester durch Eindampfen der Lösung im Vakuum als viskoses farbloses Oel isoliert.
Analyse: S = 20,6% (theor. 20,5%).

Beispiel 4

Stabilisierung von PVC mit Mercaptanen der Formel I.

Ein Dryblend, bestehend aus 100 Teilen S-PVC (K-Wert 65), 20 Teilen Dioctylphthalat, 4 Teilen epoxidiertem Sojabohnenöl (Reoplast 39), 0,5 Teilen Phosphitstabilisator (Irgastab CH 300) und 2,0 Teilen Stabilisatorzusammensetzung wird auf einem Mischwalzwerk 5 Minuten bei 170°C gewalzt und danach Testfolienstücke von 0,3 mm Dicke entnommen.

Die Folienproben werden in einem Ofen bei 180°C thermisch belastet und alle 15 Minuten an einer Probe der Yellowness-Index (YI) nach ASTM D 1925-70 bestimmt.

Die Ergebnisse sind in Tabelle 1 zusammengefasst.

In Tabelle 2 sind die Ergebnisse wiedergegeben, die bei der Mitverwendung von 1,5 Teilen Calcium-Zinkcarboxylat (Irgastab CZ 11) erhalten werden.

## Tabelle 1

| Stabilisatorzusammensetzung | | Vergilbung (Yellowness-Index) nach Belastungszeit von | | | | | |
|---|---|---|---|---|---|---|---|
| Mercaptan | Trägermaterial | 0 | 15 | 30 | 45 | 60 | 75 Min. |
| Keines | | 15 | 81 | 100 | | | |
| $CH_3CH_2C(CH_2OOCCH_2SH)_3$ | pyrogene Kieselsäure (Aerosil 380) | | | | | | |
| 100 % (Vergleich) | 0 % | 4 | 31 | 61 | 75 | 88 | >100 |
| 88 % | 12 % | 4,5 | 32 | 59 | 73 | 84 | 98 |
| 83 % | 17 % | 5 | 30 | 60 | 75 | 87 | >100 |
| 75 % | 25 % | 6 | 33 | 65 | 77 | 91 | >100 |
| 67 % | 33 % | 6,5 | 40 | 67 | 83 | 97 | >100 |
| 50 % | 50 % | 9 | 42 | 71 | 93 | >100 | |
| $C(CH_2OOCCH_2SH)_4$ | Aerosil 380 | | | | | | |
| 100 % (Vergleich) | 0 % | 3 | 29 | 42 | 54 | 70 | 83 |
| 83 % | 17 % | 5 | 36 | 55 | 68 | 79 | 93 |
| 75 % | 25 % | 6 | 39 | 59 | 70 | 86 | >100 |
| 33 % | 67 % | 12 | 65 | 92 | >100 | >100 | >100 |

## Tabelle 2

| Stabilisatorzusammensetzung | | Vergilbung (Yellowness-Index) nach Belastungszeit von | | | | | | | |
|---|---|---|---|---|---|---|---|---|---|
| Mercaptan | Trägermaterial | 0 | 15 | 30 | 45 | 60 | 75 | 90 | 105 |
| Keines | | 6 | 14 | 16 | 31 | >100 | | | |
| $CH_3CH_2C(CH_2COCCH_2SH)_2$ | pyrogene Kieselsäure (Aeorsil 380) | | | | | | | | |
| 100 % (Vergleich) | 0 % | 5 | 9 | 18 | 23 | 32 | 43 | >100 | |
| 88 % | 12 % | 5 | 9 | 18 | 24 | 34 | 43 | >100 | |
| 83 % | 17 % | 5 | 9 | 15 | 21 | 28 | 35 | >100 | |
| 75 % | 25 % | 6 | 11 | 17 | 23 | 29 | 37 | >100 | |
| 67 % | 33 % | 7 | 12 | 18 | 23 | 30 | 37 | >100 | |
| 50 % | 50 % | 7 | 15 | 20 | 24 | 31 | 39 | | |
| $C(CH_2OOCCH_2SH)_4$ | Aerosil 380 | | | | | | | | |
| 100 % (Vergleich) | 0 % | 5 | 11 | 18 | 20 | 29 | 39 | 56 | >100 |
| 83 % | 17 % | 5 | 13 | 19 | 24 | 29 | 40 | 56 | >100 |
| 75 % | 25 % | 5 | 12 | 20 | 23 | 29 | 38 | 51 | >100 |
| 67 % | 33 % | 7 | 13 | 17 | 20 | 24 | 34 | >100 | |

Beispiel 5

Stabilisierung von PVC mit Mercaptanen der Formeln II und III.

Eine Mischung aus 100 Teilen S-PVC (K-Wert 65), 20 Teilen Dioctylphthalat, 3 Teilen epoxidierten Sojabohnenöl (Reoplast 39), 1,5 Teilen Calcium-Zinkcarboxylat ( Irgastab CZ 11) und 2 Teilen eines Mercaptan-Träger-Gemisches wird wie in Beispiel 4 beschrieben zu 0,3 mm dicken Folien verarbeitet. Die Folienproben werden auf 180°C erhitzt und alle 15 Minuten ihre Verfärbung nach HSTM D 1925-70 bestimmt. Die Ergebnisse sind in Tabelle 3 zusammengestellt.

Tabelle 3

| Stabilisatorzusammensetzung | | Yellowness-Index nach Belastungszeit von | | | | | | | |
|---|---|---|---|---|---|---|---|---|---|
| Mercaptan | Trägermaterial | 0 | 15 | 30 | 45 | 60 | 75 | 90 | 105 Min. |
| Keines | Keines | 10,5 | 27 | 44 | 106 | schwarz | | | |
| Produkt aus Beispiel 1 / 75% | Pyrogene Kieselsäure (Aerosil 380) 25% | 5,4 | 9 | 16 | 20 | 32 | 35 | 43 | 95 |
| Produkt aus Beispiel 3 / 75% | Formaldehyd-Harnstoff-Harz (Pergopak M) 25% | 6,4 | 13 | 19 | 29 | 52 | 55 | 80 | 149 |

Beispiel 6

Stabilisierung von PVC mit Metallcarboxylat-Stabilisatoren.

Eine Mischung von 100 Teilen S-PVC (K-Wert 65), 20 Teilen Dioctylphthalat, 3 Teilen epoxidiertem Sojabohnenöl und den in Tabelle 4 angegebenen Teilen Mercaptan-Metallcarboxylat-Gemisch wird wie in Beispiel 4 beschrieben zu einer Folie von 0,3 mm Dicke verarbeitet und diese bei 180°C gealtert. Tabelle 4 gibt den Yellowness-Index gemäss ASTM D 1925-70 als Mass der Verfärbung an. Als Vergleich wurden Folien untersucht, die ein Metallcarboxylat ohne Mercaptan enthalten.

**Tabelle 4**

| Stabilisatorzusammensetzung | | YI nach Belastungszeit von | | | | | | | | |
|---|---|---|---|---|---|---|---|---|---|---|
| Mercaptan | Trägermaterial | 0 | 15 | 30 | 45 | 60 | 75 | 90 | 105 | 120 Min. |
| - | Calcium-Zink-Carboxylat (Irgastab CZ 11) 1,5 Teile | 10,5 | 27 | 45 | 106 | schwarz | | | | |
| - | Barium-Calcium-Carboxylat (Irgastab BC 446) 2,0 Teile | 4,8 | 9 | 11,3 | 27 | 41 | 56 | 97 | 124 | dunkel-bräun |
| $C_2H_5C(CH_2OCOCH_2SH)_4$ 1 Teil | Irgastab CZ 11 2 Teile | 8,1 | 22 | 26 | 29 | 41 | 49 | 54 | 68 | 87 |

Patentansprüche

1. Stabilisatorzusammensetzung aus einem oder mehreren Mercaptanen der Formel I, II, III oder IV

$R(X)_n$ I

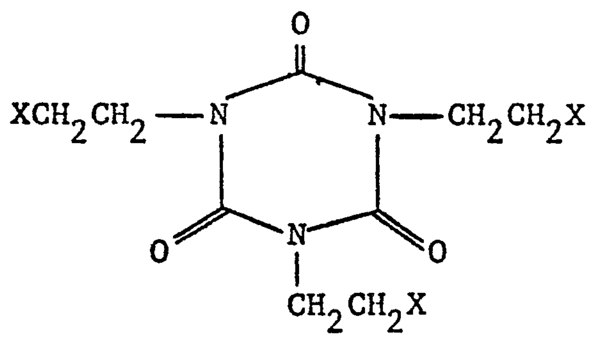

II

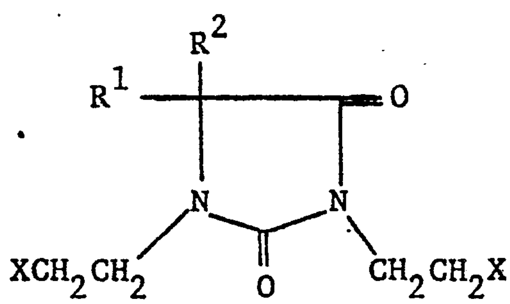

III

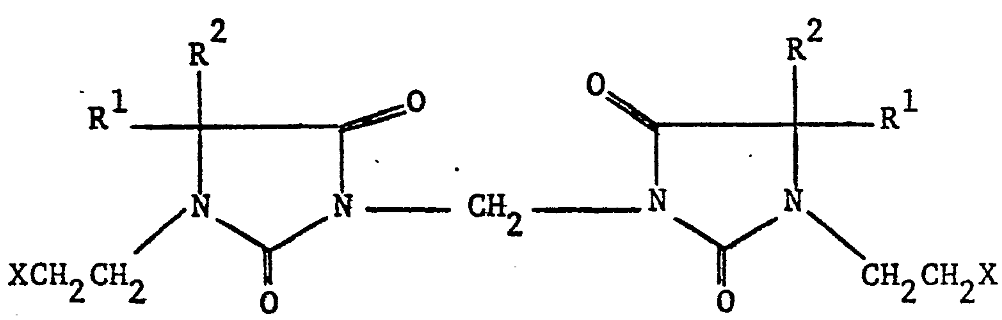

IV

worin

n eine ganze Zahl von 1 bis 6,

R einen n-wertigen, gegebenenfalls durch O- oder S-Atome

unterbrochenen oder durch OH substituierten aliphatischen oder cycloaliphatischen Kohlenwasserstoffrest,

$R^1$ und $R^2$ Alkyl mit 1-4 C-Atomen und

X eine Gruppe $-O-CO-C_mH_{2m}-SH$ darstellen, worin

m 1 oder 2 ist,

und einem festen Trägermaterial.

2. Zusammensetzung gemäss Anspruch 1, dadurch gekennzeichnet, dass das Gewichtsverhältnis von Trägermaterial zu Mercaptan 3:1 bis 1:12, vorzugsweise 1:1 bis 1:10 beträgt.

3. Zusammensetzung gemäss Anspruch 1, dadurch gekennzeichnet, dass das feste Trägermaterial ein pulverförmiges Harnstoff-Formaldehyd-Polymer ist.

4. Zusammensetzung gemäss Anspruch 1, dadurch gekennzeichnet, dass das feste Trägermaterial ein synthetisches Kieselsäureaerogel ist.

5. Zusammensetzung gemäss Anspruch 1, dadurch gekennzeichnet, dass das feste Trägermaterial ein Metallcarboxylat von einem der Metalle Ca, Mg, Zn, Ba oder Cd ist.

6. Zusammensetzung gemäss Anspruch 1, dadurch gekennzeichnet, dass das Mercaptan eine Verbindung der Formel I ist, worin R $C_1$-$C_{18}$-Alkyl, $C_5$-$C_6$-Cycloalkyl, $C_3$-$C_8$-Alkoxyalkyl, $C_3$-$C_8$-Alkylthioalkyl, $C_2$-$C_{12}$-Alkylen, Oxaalkylen oder Thiaalkylen, $C_6$-$C_{14}$-Cycloalkylen, den Rest eines $C_6$-$C_{24}$ Polyoxyalkylendiols oder den Rest eines aliphatischen oder cycloaliphatischen drei- bis sechswertigen Polyols mit 3-10 C-Atomen darstellt.

7. Zusammensetzung gemäss Anspruch 1, dadurch gekennzeichnet, dass das Mercaptan eine Verbindung der Formel III oder IV ist, worin $R^1$ und $R^2$ Methyl darstellen.

8. Zusammensetzung gemäss Anspruch 1, dadurch gekennzeichnet, dass das Mercaptan eine Verbindung der Formel I ist, worin n 3 ist und R ein Rest der Formel

$-CH_2-\overset{|}{C}H-CH_2-$, $CH_3-C(CH_2-)_3$, $C_2H_5-C(CH_2-)_3$

oder n 4 und R ein Rest der Formel $C(CH_2-)_4$ ist.

9. Verwendung von Mercaptanen der Formel I, II, III oder IV

$R(X)_n$ I

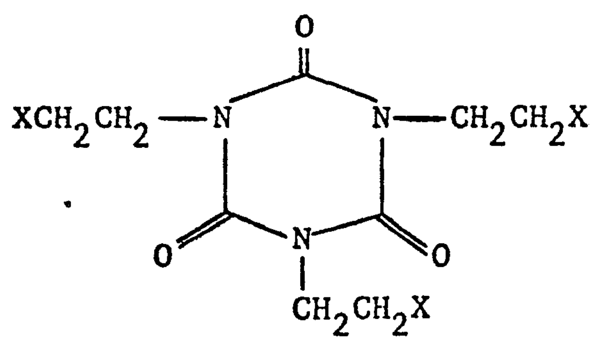

II

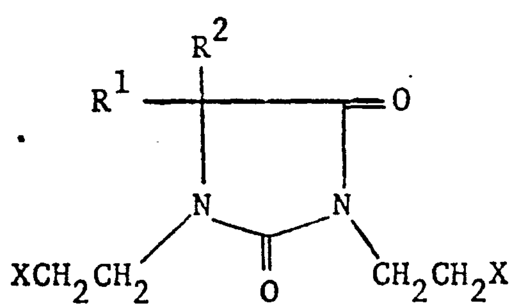

III

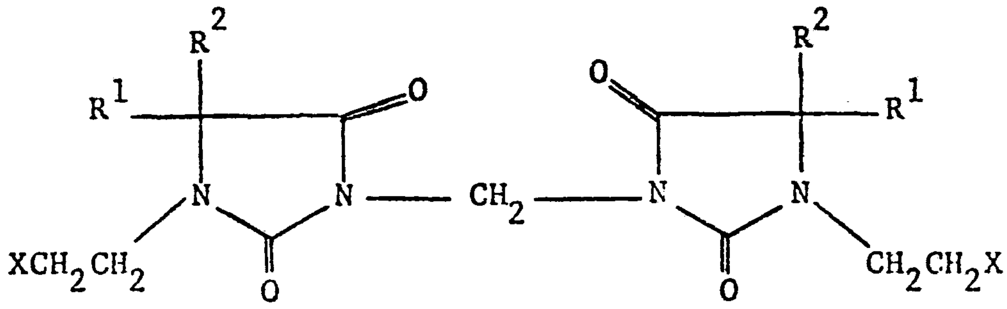

IV

worin

n eine ganze Zahl von 1 bis 6,

R einen n-wertigen, gegebenenfalls durch O- oder S-Atome unterbrochenen oder durch OH substituierten aliphatischen oder cycloaliphatischen Kohlenwasserstoffrest,

$R^1$ und $R^2$ Alkyl mit 1-4 C-Atomen und

X eine Gruppe $-O-CO-C_mH_{2m}-SH$ darstellen, worin

m 1 oder 2 ist,

zum Stabilisieren von chlorhaltigen thermoplastischen Kunststoffen, dadurch gekennzeichnet, dass die Mercaptane auf einem festen Trägermaterial aufgebracht sind.

10. Verwendung gemäss Anspruch 8, dadurch gekennzeichnet, dass der Kunststoff ein Homo- oder Copolymerisat von Vinylchlorid ist.

11. Verwendung gemäss Anspruch 8, dadurch gekennzeichnet, dass man, bezogen auf den Kunststoff, 0,01 bis 10, vorzugsweise 0,5 bis 3 Gew.-% des auf Träger aufgebrachten Mercaptanes verwendet.

12. Kunststoffzusammensetzung, enthaltend einen chlorhaltigen Thermoplast und eine Stabilisatorzusammensetzung gemäss Anspruch 1.

13. Kunststoffzusammensetzung gemäss Anspruch 12, dadurch gekennzeichnet, dass der chlorhaltige Thermoplast ein Homo- oder Kopolymer des Vinylchlorids ist.

14. Kunststoffzusammensetzung gemäss Anspruch 12, dadurch gekennzeichnet, dass die Stabilisatorzusammensetzung darin in einer Menge von 0,01 bis 10, vorzugsweise 0,5 bis 3 Gew.-%, bezogen auf den chlorhaltigen Thermoplast, enthalten ist.

15. Verbindungen der Formel II, III oder IV

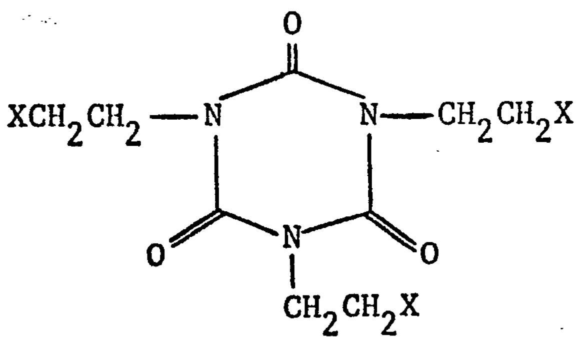

II

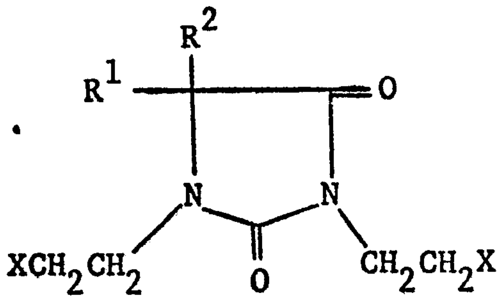

III

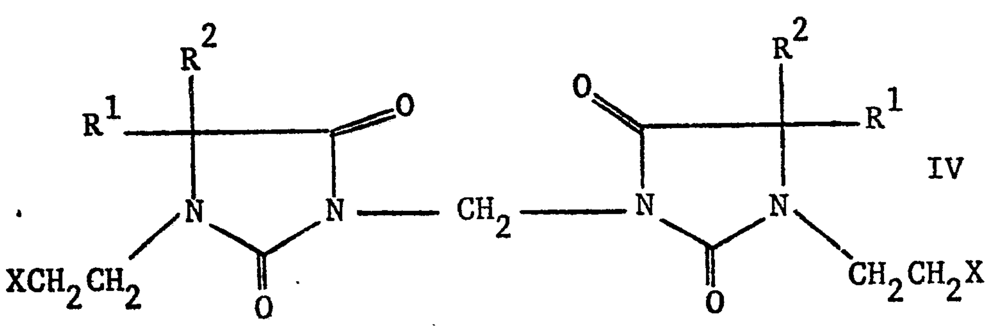

IV IV

worin $R^1$ und $R^2$ Alkyl mit 1-4 C-Atomen und X eine Gruppe $-O-CO-C_mH_{2m}-SH$ darstellen und m 1 oder 2 ist.

16. Verbindungen der Formel III oder IV gemäss Anspruch 14, worin $R^1$ und $R^2$ Methyl sind.

0001631

Europäisches Patentamt

# EUROPÄISCHER RECHERCHENBERICHT

Nummer der Anmeldung
EP 78 10 1166

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| DX | US - A - 3 144 422 (OTTO A. HOMBERG)<br>* Spalte 2, Zeilen 56-59; Spalte 3, Zeilen 45-60; Spalte 5, Zeilen 48-52 *<br>-- | 1,5-14 | C 08 K 5/00<br>C 08 L 27/06 |
| X | US - A - 4 002 798 (CHARLES R. MORGAN)<br>* Spalten 17,18; Beispiele VII und VIII *<br>-- | 15,16 | |
| | | | RECHERCHIERTE SACHGEBIETE (Int. Cl.²) |
| X | US - A - 3 676 440 (LEONORE J. LOS)<br>* Spalte 3, Beispiele 1,2; Spalte 5 *<br>-- | 15,16 | C 08 K 5/00<br>C 08 L 27/06<br>57/08<br>101/04<br>C 08 K 5/37 |
| A | FR - A - 1 318 826 (CARLISLE CHEMICAL WORKS)<br>* Zusammenfassung *<br>-- | 1,10-14 | |
| A | FR - A - 2 297 882 (CINCINNATI MILACRON)<br>* Ansprüche *<br>-- | 1,10-14 | |
| A | CHEMICAL ABSTRACTS, Vol. 83, Nr. 116050j, 1975,<br>Colombus, Ohio, USA,<br>SHINKAWA et al." Stabilized halogen containing resins"<br>* Die ganze Zusammenfassung *<br>& JP - A - 7 540 649 (KYODO YAKUHIN) )<br>-- ./. | 1,10 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Den Haag | 23-01-1979 | LENSEN |

0001631

Europäisches Patentamt

**EUROPÄISCHER RECHERCHENBERICHT**

Nummer der Anmeldung

EP 78 10 1166

-2-

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| A | GB - A - 771 857 (METAL & THERMIT CO)<br>* Ansprüche *<br>---- | 1,10 | |
| | | | RECHERCHIERTE SACHGEBIETE (Int. Cl.²) |